# EUROPÄISCHE PATENTSCHRIFT

(11) **EP 1 254 036 B1**
(45) Veröffentlichungstag und Bekanntmachung des Hinweises auf die Patenterteilung: **16.02.2005**
(21) Anmeldenummer: 00991808.7
(22) Anmeldetag: 22.12.2000
(51) Int. Cl.: B60D 1/52

(54) **VERFAHREN ZUM EIN-/AUSKLAPPEN EINER ELEKTRISCH BETRIEBENEN ANHÄNGERKUPPLUNG UND ELEKTRISCH BETRIEBENE ANHÄNGERKUPPLUNG**
METHOD FOR FOLDING IN/OUT AN ELECTRICALLY ACTUATED TOW HITCH AND ELECTRICALLY ACTUATED TOW HITCH
PROCEDE POUR RENTRER ET SORTIR UN DISPOSITIF D'ATTELAGE ELECTRIQUE, ET DISPOSITIF D'ATTELAGE ELECTRIQUE

(30) Priorität: 28.01.2000 DE 10003607
(43) Veröffentlichungstag der Anmeldung: 06.11.2002
(73) Patentinhaber: Volkswagen AG, 38436 Wolfsburg (DE)
(72) Erfinder: BURNUS, Oliver, 29393 Gross Oesingen (DE)
(86) Internationale Anmeldenummer: PCT/EP2000/013246
(87) Internationale Veröffentlichungsnummer: WO 2001/054931

(56) Entgegenhaltungen:
- DE-A- 4 122 778
- DE-A- 19 711 535
- FR-A- 2 759 634
- US-A- 4 744 583

## Beschreibung

Die Erfindung bezieht sich auf ein Verfahren zum Ein-/Ausklappen einer elektrisch betriebenen Anhängerkupplung für die Verwendung bei Kraftfahrzeugen mit Einparkhilfe und für die Verwendung bei Kraftfahrzeugen ohne Einparkhilfe, die mit wenigstens einem zusätzlichen Einparkhilfe-Sensoren ausgestattet sind.

Die Erfindung bezieht sich außerdem auf eine elektrisch betriebene Anhängerkupplung für die Verwendung bei Kraftfahrzeugen mit Einparkhilfe und für die Verwendung bei Kraftfahrzeugen ohne Einparkhilfe, die mit wenigstens einem zusätzlichen Einparkhilfe-Sensoren ausgestattet sind, mit einer elektrisch ein-/ausklappbaren Kupplungsvorrichtung, mit einer Betätigungseinrichtung zum Aktivieren dieser Kupplungsvorrichtung und mit einer Kontrolleinrichtung zum Steuern der Kupplungsvorrichtung.

Aus dem Stand der Technik sind verschiedene Verfahren bzw. Vorrichtungen betreffend elektrisch betriebene Anhängerkupplungen bekannt. So ist z. B. aus der DE 197 49 544 A1 eine insbesondere für Personenkraftwagen geeignete Anhängerkupplung mit einem elektrischen Servomotor bekannt, mit einem am Fahrzeug montierten Halteteil für die lösbare Aufnahme des Endes eines Schaftes der Kugelstange z. B. eines Anhängers. Es ist dabei für die Betätigung dieses am Fahrzeug montierten Halteteiles bzw. des damit zusammenwirkenden elektrischen Servomotors im Kofferraum des Fahrzeuges ein Schalter angeordnet. Außerdem ist im Servomotor ein Schaltglied zur Steuerung des Servomotors bzw. des Halteteiles vorgesehen.

Aus der DE 197 11 535 A1 ist eine Anhängerkupplung für Kraftfahrzeuge bekannt, wobei eine Kupplungsstange als bewegliches Teil kraftbetätigt zwischen zwei Endlagen, einer Ruhe und einer Betriebsstellung, mittels eines an einem festen Teil des Kraftfahrzeuges montierten Motors verstellbar ausgebildet ist.

Aus dem Stand der Technik sind außerdem elektrisch betriebene Anhängerkupplungen mit elektrisch ein-/ausklappbaren Kupplungsvorrichtungen bekannt, bei deren Aktivierung über einen gesteckten Anhängerstecker überprüft wird, ob die Anhängerkupplung in Benutzung ist. Nachteilig ist hierbei, daß z. B. kurze Rangierarbeiten häufig auch ohne Steckung der elektrischen Verbindung zum Anhänger durchgeführt werden, so daß eine Kontrolle des Zustandes in diesem Falle nicht möglich ist, im übrigen wird hier z. B. bei einem elektrischen Defekt der Anhänger nicht erkannt. Weiterhin nachteilig ist bei einer derartigen Ausführungsform einer elektrisch betriebenen Anhängerkupplung, daß es bei dicht an Wänden oder anderen Hindernissen geparkten Fahrzeugen beim Ausklappen der Kupplungsvorrichtung der Anhängerkupplung zu Beschädigungen kommen kann.

Der Erfindung liegt die Aufgabe zugrunde, ein Verfahren zum Ein-/Ausklappen einer elektrisch betriebenen Anhängerkupplung bzw. eine elektrisch betriebene Anhängerkupplung unter Beibehaltung der bisherigen Vorteile in der Weise zu verbessern, daß ein Schutz vor unerlaubtem Aus-/Einklappen dieser elektrisch betriebenen Anhängerkupplung bereitgestellt wird.

Diese Aufgabe wird bei einem Verfahren zum Ein-/Ausklappen einer elektrisch betriebenen Anhängerkupplung für die Verwendung bei Kraftfahrzeugen mit Einparkhilfe erfindungsgemäß durch die folgenden Verfahrensschritte gelöst:
- Betätigen der elektrisch betriebenen Anhängerkupplung in Richtung Ein-/Ausklappen
- Aktivierung der Einparkhilfe durch das Betätigungssignal
- Überprüfung eines bestimmten, festgelegten Raumes durch die Einparkhilfe
- bei Freigabe durch die Einparkhilfe Ansteuern des Ein-/Ausklappvorganges.

Die Aufgabe wird bei einem Verfahren zum Ein-/Ausklappen einer elektrisch betriebenen Anhängerkupplung für die Verwendung bei Kraftfahrzeugen ohne Einparkhilfe, die mit wenigstens einem zusätzlichen Einparkhilfe-Sensoren ausgestattet sind, erfindungsgemäß durch die folgenden Verfahrensschritte gelöst:
- Betätigen der elektrisch betriebenen Anhängerkupplung in Richtung Ein-/Ausklappen
- Aktivierung des wenigstens einen zusätzlichen Einparkhilfe-Sensoren durch das Betätigungssignal
- Überprüfung eines bestimmten, festgelegten Raumes durch den wenigstens einen Einparkhilfe-Sensoren
- bei Freigabe durch den wenigstens einen Einparkhilfe-Sensoren Ansteuern des Ein-/Ausklappvorganges.

Die Aufgabe wird bei einer elektrisch betriebenen Anhängerkupplung für die Verwendung bei Kraftfahrzeugen mit Einparkhilfe erfindungsgemäß dadurch gelöst, daß die Einparkhilfe als Bestandteil der Kontrolleinrichtung zum Steuern der Kupplungsvorrichtung ausgebildet ist.

Die Aufgabe wird bei einer elektrisch betriebenen Anhängerkupplung für die Verwendung bei Kraftfahrzeugen ohne Einparkhilfe, die mit wenigstens einem zusätzlichen Einparkhilfe-Sensoren ausgestattet sind, erfindungsgemäß dadurch gelöst, daß der wenigstens eine zusätzliche Einparkhilfe-Sensor als Bestandteil der Kontrolleinrichtung zum Steuern der Kupplungsvorrichtung ausgebildet ist.

Mit dem erfindungsgemäßen Verfahren bzw. der erfindungsgemäßen elektrisch betriebenen Anhängerkupplung wird erstmalig mit einfachen Mitteln bzw. einfachen Verfahrensschritten die Möglichkeit geschaffen, bei elektrisch betriebenen Anhängerkupplungen einen Schutz vor unerlaubtem Aus-/Einklappen der Kupplungsvorrichtung bereitzustellen. Es werden dabei die Einparkhilfe bzw. die zusätzlichen Einparkhilfe-Sensoren mit Betätigung der elektrischen Anhängerkupplung in Richtung Ein-/und Ausklappen aktiviert. Erst nach der Freigabe durch diese Einparkhilfe bzw. Einparkhilfe-Sensoren wird der Vorgang des Ein-/Ausklappens der Kupplungsvorrichtung der Anhängerkupplung angesteuert. Es wird dadurch insbesondere vermieden, daß es durch ein unerlaubtes Aus-/Einklappen der Kupplungsvorrichtung der Anhängerkupplung z. B. an Wänden oder anderen Hindernissen zu Beschädigungen kommen kann. Durch die erfindungsgemäße Ausbildung werden somit die Handhabbarkeit und die Funktionseigenschaften verbessert, und der Komfort der elektrisch betriebenen Anhängerkupplung wird wesentlich erhöht. Es besteht durch das Zusammenwirken der elektrisch betriebenen Anhängerkupplung mit der Einparkhilfe bzw. den zusätzlichen Einparkhilfe-Sensoren außerdem die Möglichkeit, die Einparkhilfe bei herausgeklappter Kupplungsvorrichtung der Anhängerkupplung auf die geänderten Gesamtabmessungen des Kraftfahrzeuges neu einzustellen.

Bei der bevorzugten Ausführungsform des Verfahrens zum Ein-/Ausklappen einer elektrisch betriebenen Anhängerkupplung sind die folgenden zusätzlichen Verfahrensschritte vorgesehen:
- Aktivierung einer Statusabfrage der elektrisch betriebenen Anhängerkupplung durch das Betätigungssignal gleichzeitig mit der Aktivierung der Einparkhilfe/Einparkhilfe-Sensoren
- bei korrektem Statussignal und Freigabe durch die Einparkhilfe/Einparkhilfe-Sensoren Ansteuern des Ein-/Ausklappvorganges.

Auf diese Weise wird mit einfachen Schritten parallel zu der Überprüfung eines bestimmten, festgelegten Raumes durch die Einparkhilfe oder durch die zusätzlichen Einparkhilfe-Sensoren eine Statusabfrage der elektrisch betriebenen Anhängerkupplung durchgeführt, so daß ein Ansteuern des Ein-/Ausklappvorganges nur dann erfolgt, wenn neben der Freigabe durch die Einparkhilfe/Einparkhilfe-Sensoren das jeweils korrekte Statussignal ausgegeben wird. Es werden dadurch die Funktionseigenschaften der elektrisch betriebenen Anhängerkupplung zusätzlich verbessert.

Nach einem letzten Vorschlag der vorliegenden Erfindung ist der wenigstens eine zusätzliche Einparkhilfe-Sensor mittig ober- oder unterhalb der Kupplungsvorrichtung der Anhängerkupplung angeordnet. Es ist dadurch eine Erkennung von Hindernissen im Bereich der ein- oder auszuklappenden Kupplungsvorrichtung sichergestellt.

Die Erfindung ist in den Figuren der Zeichnung in einem Ausführungsbeispiel dargestellt.
Es zeigen:
- Fig. 1: die schematische Darstellung eines Ablaufes des erfindungsgemäßen Verfahrens in einer beispielhaften Ausführungsform,
- Fig. 2: eine schematisierte Darstellung der erfindungsgemäßen Anhängerkupplung mit angedeuteter Kontrolleinheit und Betätigungseinrichtung.

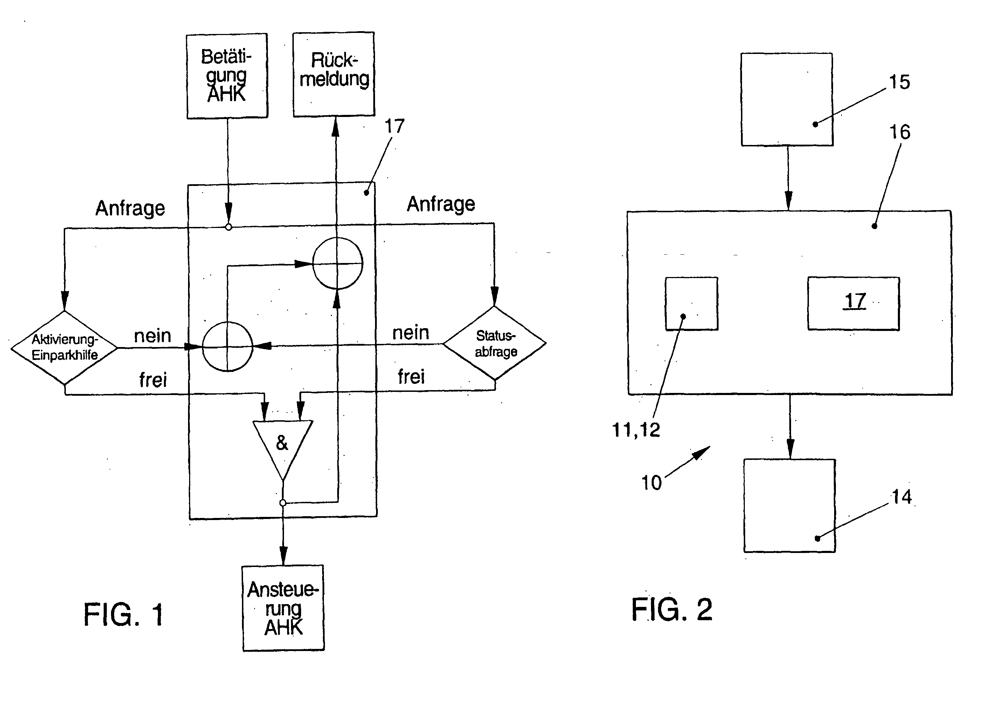

Die erfindungsgemäße elektrisch betriebene Anhängerkupplung ist generell mit 10 bezeichnet. Es ist dazu in der Fig. 1 der Zeichnung der Ablauf einer beispielhaften Ausführungsform des erfindungsgemäßen Verfahrens schematisch dargestellt. Es wird dieses Verfahren bei Kraftfahrzeugen mit Einparkhilfe 11 oder bei Kraftfahrzeugen ohne Einparkhilfe, welche mit wenigstens einem zusätzlichen Einparkhilfe-Sensor 12 ausgestattet sind, verwendet. In beiden Fällen wird zunächst die elektrisch betriebene Anhängerkupplung 10 in Richtung Ein- oder Ausklappen betätigt. Durch das Betätigungssignal wird dann eine Aktivierung der Einparkhilfe 11 bzw. des wenigstens einen zusätzlichen Einparkhilfe-Sensoren 12 durchgeführt. Durch die Einparkhilfe 11 bzw. den wenigstens einen Einparkhilfe-Sensoren 12 wird dann ein bestimmter, festgelegter - Raum überprüft. Bei Nicht-Freigabe der Ansteuerung des Ein/Ausklappvorganges der Kupplungsvorrichtung 14 wird von der Einparkhilfe 11 bzw. dem wenigstens einen zusätzlichen Einparkhilfe-Sensoren 12 über die Steuereinrichtung 17 eine entsprechende Rückmeldung zu der Bedienperson gegeben. Im Falle der Freigabe des Ansteuerbefehles wird ein entsprechendes Freigabe-Signal (z. B. über serielle [CAN], analoge oder digitale Datenübertragung) erzeugt, das mit dem entsprechenden Freigabe-Signal der noch zu behandelnden Statusabfrage über eine UND-Funktion verknüpft wird, und anschließend den Ein-/Ausklappvorgang der Kupplungsvorrichtung 14 der Anhängerkupplung 10 ansteuert. Das Ausgangssignal der UND-Verknüpfung wird über die Steuereinrichtung 17 an die Bedienperson zurückgemeldet.

Bei dem schematisch dargestellten Verfahrensablauf dieser beispielhaften Ausführungsform werden folgende zusätzliche Verfahrensschritte durchgeführt:

Mit der Aktivierung der Einparkhilfe 11 bzw. des Einparkhilfe-Sensoren 12 wird durch das Betätigungssignal eine Statusabfrage der elektrisch betriebenen Anhängerkupplung 10 durchgeführt. Es wird dabei bei nicht korrektem Statussignal über die Steuereinrichtung 17 eine entsprechende Rückmeldung an die Bedienperson gegeben. Bei korrektem Statussignal wird ein entsprechendes Freigabe-Signal an die erwähnte UND-Verknüpfung mit dem zweiten Freigabe-Signal gegeben, so daß bei korrektem Statussignal und gleichzeitiger Freigabe durch die Einparkhilfe 11/Einparkhilfe-Sensoren 12 der Ein-/Ausklappvorgang der Kupplungsvorrichtung 14 der Anhängerkupplung 10 angesteuert wird.

Die elektrisch betriebene Anhängerkupplung 10, die für die Verwendung bei Kraftfahrzeugen mit Einparkhilfe 11 und bei Kraftfahrzeugen ohne Einparkhilfe, die mit wenigstens einem zusätzlichen Einparkhilfe-Sensoren 12 ausgestattet sind, vorgesehen ist, weist also, siehe auch die Fig. 2 der Zeichnung, eine elektrisch ein-/ausklappbare Kupplungsvorrichtung 14, eine Betätigungseinrichtung 15 zum Aktivieren dieser Kupplungsvorrichtung 14 und eine Kontrolleinrichtung 16 zum Steuern der Kupplungsvorrichtung 14 auf. Die Einparkhilfe 11 bzw. der wenigstens eine zusätzliche Einparkhilfe-Sensor 12 sind dabei als Bestandteil der Kontrolleinrichtung 16 zum Steuern der Kupplungsvorrichtung 14 ausgebildet. Die Kontrolleinrichtung 16 weist außerdem neben dem Bestandteil Einparkhilfe 11 bzw. Einparkhilfe-Sensor 12 eine Steuereinrichtung 17 auf.

Bei der Verwendung der erfindungsgemäßen elektrisch betriebenen Anhängerkupplung 10 bei Kraftfahrzeugen ohne Einparkhilfe, die mit wenigstens einem zusätzlichen Einparkhilfe-Sensor 12 ausgestattet sind, ist der wenigstens eine zusätzliche Einparkhilfe-Sensor 12 in in den Figuren der Zeichnung nicht dargestellter Weise mittig ober- oder unterhalb der Kupplungsvorrichtung 14 der Anhängerkupplung 10 angeordnet. Dies kann z. B. im Stoßfänger des Kraftfahrzeuges erfolgen.

Mit dem erfindungsgemäßen Verfahren bzw. der erfindungsgemäßen Anhängerkupplung 10 wird erstmalig bei elektrisch betriebenen Anhängerkupplungen ein Schutz vor unerlaubtem Aus-/Einklappen bereit gestellt. Dadurch wird insbesondere vermieden, daß es bei dicht an Wänden oder anderen Hindernissen geparkten Fahrzeugen z. B. bei Ausklappen der Kupplungsvorrichtung 14 der Anhängerkupplung 10 zu Beschädigungen kommt. Außerdem wird durch das Kombinieren der Einparkhilfe 11 bzw. der Einparkhilfe-Sensoren 12 mit der Kontrolleinrichtung 16 zum Steuern der Kupplungsvorrichtung 14 die Möglichkeit geschaffen, die Einparkhilfe 11 bzw. die Einparkhilfe-Sensoren 12 bei ausgeklappter Kupplungsvorrichtung 14 an die veränderten Gesamt- insbesondere Längenabmessungen des Fahrzeuges anzupassen. Mit dem erfindungsgemäßen Verfahren und der erfindungsgemäß ausgebildeten Anhängerkupplung werden insgesamt die Handhabung und die Funktionseigenschaften verbessert, und der Komfort der elektrisch betriebenen Anhängerkupplung 10 wird wesentlich erhöht.

Wie bereits erwähnt, ist die dargestellte Ausführungsform des erfindungsgemäßen Verfahrens und der erfindungsgemäßen Anhängerkupplung 10 nur eine bspw. Verwirklichung der Erfindung diese ist nicht darauf beschränkt, es sind vielmehr noch mancherlei Abänderungen und Ausbildungen möglich. So ist z. B. denkbar, auf die parallele Statusabfrage zu verzichten, außerdem denkbar ist eine von den Figuren der Zeichnung abweichende Ausgestaltung der Kontrolleinrichtung 16 und Steuereinrichtung 17.

### BEZUGSZEICHENLISTE

- 10: elektrisch betriebene Anhängerkupplung
- 11: Einparkhilfe
- 12: Einparkhilfe-Sensor
- 14: Kupplungsvorrichtung (von 10)
- 15: Betätigungseinrichtung (von 14)
- 16: Kontrolleinrichtung
- 17: Steuereinrichtung (von 16)

## Patentansprüche

1. Verfahren zum Ein-/Ausklappen einer elektrisch betriebenen Anhängerkupplung (10) von Kraftfahrzeugen **gekennzeichnet durch** die folgenden Verfahrensschritte:
- Betätigen der elektrisch betriebenen Anhängerkupplung (10) in Richtung Einoder Ausklappen
- Aktivierung eines wenigstens einen Einparkhilfe-Sensors (12) **durch** das Betätigungssignal
- Überprüfung eines bestimmten, festgelegten Raumes **durch** den wenigstens einen Einparkhilfe-Sensor (12)
- bei Freigabe **durch** den wenigstens einen Einparkhilfe-Sensor (12), Ansteuern des Ein-/Ausklappvorganges.

2. Verfahren nach Anspruch 1, **dadurch gekennzeichnet, dass** bei Nicht-Freigabe der Ansteuerung des Ein-/Ausklappvorganges der Kupplungsvorrichtung (14) von einer Einparkhilfe (11) oder dem wenigstens einen Einparkhilfe-Sensor (12) über die Steuereinrichtung (17) eine Rückmeldung zu der Bedienperson gegeben wird.

3. Verfahren nach Anspruch 1, **gekennzeichnet durch** die zusätzlichen Verfahrensschritte,
- Aktivierung einer Statusabfrage der elektrisch betriebenen Anhängerkupplung (10) **durch** das Betätigungssignal gleichzeitig mit der Aktivierung einer Einparkhilfe (11) / von Einparkhilfe-Sensoren (12)
- bei korrektem Statussignal und Freigabe **durch** die Einparkhilfe (11) / Einparkhilfe-Sensoren (12) Ansteuern des Ein-/Ausklappvorganges.

4. Elektrisch betriebene Anhängerkupplung (10) für Kraftfahrzeuge mit einer elektrisch ein/ausklappbaren Kupplungsvorrichtung (14), mit einer Betätigungseinrichtung (15) zum Aktivieren dieser Kupplungsvorrichtung (14) und mit einer Kontrolleinrichtung (16) zum Steuern der Kupplungsvorrichtung (14), **dadurch gekennzeichnet, dass** der Kontrolleinrichtung (16) wenigstens ein Freigabesignal eines Einparkhilfe-Sensors (12) oder einer Einparkhilfe (11) zuführbar ist.

5. Elektrisch betriebene Anhängerkupplung (10) nach Anspruch 4, **dadurch gekennzeichnet, dass** wenigstens ein Einparkhilfe-Sensor (12) als Bestandteil der Kontrolleinrichtung (16) zum Steuern der Kupplungsvorrichtung (14) ausgebildet ist.

6. Elektrisch betriebene Anhängerkupplung (10) nach Anspruch 4 oder 5, **dadurch gekennzeichnet, dass** eine Einparkhilfe (11) als Bestandteil der Kontrolleinrichtung (16) zum Steuern der Kupplungsvorrichtung (14) ausgebildet ist.

7. Elektrisch betriebene Anhängerkupplung (10) nach einem Ansprüche 4 bis 6, **dadurch gekennzeichnet, dass** der wenigstens eine Einparkhilfe-Sensor (12) mittig ober- oder unterhalb der Kupplungsvorrichtung (14) der Anhängerkupplung (10) angeordnet ist.

8. Elektrisch betriebene Anhängerkupplung (10) nach einem der Ansprüche 4 bis 7, **dadurch gekennzeichnet, dass** die Kontrolleinrichtung (16) eine Steuereinrichtung (17) aufweist.

## Claims

1. Method for folding in/out an electrically operated trailer coupling (10) of motor vehicles **characterized by** the following method steps:
- the activation of the electrically operated trailer coupling (10) in the direction of folding in or out
- activation of at least one parking aid sensor (12) by the activation signal
- checking of a specific, defined space by the at least one parking aid sensor (12)
- actuation of the folding in/out process when enabled by the at least one parking aid sensor (12).

2. Method according to Claim 1, **characterized in that**, when the actuation of the folding in/out process of the coupling device (14) is not enabled, a status signal is transmitted to the operator by a parking aid (11) or the at least one parking aid sensor (12) by means of the control device (17).

3. Method according to Claim 1, **characterized by** the additional method steps,
- activation of a status interrogation of the electrically operated trailer coupling (10) by the activation signal at the same time as the activation of a parking aid (11)/parking aid sensors (12)
- when the status signal is correct and enabling is performed by the parking aid (11)/parking aid sensors (12), the folding in/out process is actuated.

4. Electrically operated trailer coupling (10) for motor vehicles having a coupling device (14) which can be folded in/out electrically, having an activation device (15) for activating this coupling device (14) and having a monitoring device (16) for controlling the coupling device (14), **characterized in that** at least one enable signal of a parking aid sensor (12) or of a parking aid (11) can be fed to the monitoring device (16).

5. Electrically operated trailer coupling (10) according to Claim 4, **characterized in that** at least one parking aid sensor (12) is embodied as a component of the monitoring device (16) for controlling the coupling device (14).

6. Electrically operated trailer coupling (10) according to Claim 4 or 5, **characterized in that** a parking aid (11) is embodied as a component of the monitoring device (16) for controlling the coupling device (14).

7. Electrically operated trailer coupling (10) according to one of Claims 4 to 6, **characterized in that** the at least one parking aid sensor (12) is arranged centrally above or below the coupling device (14) of the trailer coupling (10).

8. Electrically operated trailer coupling (10) according to one of Claims 4 to 7, **characterized in that** the monitoring device (16) has a control device (17).

## Revendications

1. Procédé pour rentrer et sortir un dispositif d'attelage électrique (10) de véhicules automobiles, **caractérisé par** les étapes de procédé suivantes :
- actionnement du dispositif d'attelage électrique (10) dans le sens d'une rétraction ou d'une sortie,
- activation d'au moins un capteur d'assistance au stationnement (12) par le signal d'actionnement,
- vérification d'un espace déterminé fixe par l'au moins un capteur d'assistance au stationnement (12),
- lors de la libération par l'au moins un capteur d'assistance au stationnement (12), commande de l'opération de rétraction/sortie.

2. Procédé selon la revendication 1, **caractérisé en ce que** dans le cas où la commande de l'opération de rétraction/sortie du dispositif d'accouplement (14) n'est pas libérée par une assistance au stationnement (11) ou par l'au moins un capteur d'assistance au stationnement (12) par le biais du dispositif de commande (17), une information en retour est fournie à l'opérateur.

3. Procédé selon la revendication 1, **caractérisé par** les étapes de procédé supplémentaires suivantes :
- activation d'une demande d'état du dispositif d'attelage électrique (10) par le signal d'actionnement simultanément à l'activation d'une assistance au stationnement (11) / par des capteurs d'assistance au stationnement (12),
- dans le cas d'un signal d'état correct et d'une libération par l'assistance au stationnement (11) / par des capteurs d'assistance au stationnement (12), commande de l'opération de rétraction/sortie.

4. Dispositif d'attelage électrique (10) pour véhicules automobiles comprenant un dispositif d'accouplement pouvant être rentré/sorti (14), un dispositif d'actionnement (15) pour activer ce dispositif d'accouplement (14) et un dispositif de contrôle (16) pour commander le dispositif d'accouplement (14), **caractérisé en ce que** l'on peut transmettre au dispositif de contrôle (16) au moins un signal de libération d'un capteur d'assistance au stationnement (12) ou d'une assistance au stationnement (11).

5. Dispositif d'attelage électrique (10) selon la revendication 4, **caractérisé en ce qu'**au moins un capteur d'assistance au stationnement (12) est réalisé en tant que constituant du dispositif de contrôle (16) pour la commande du dispositif d'accouplement (14).

6. Dispositif d'attelage électrique (10) selon la revendication 4 ou 5, **caractérisé en ce qu'**une assistance au stationnement (11) est réalisée en tant que constituant du dispositif de contrôle (16) pour la commande du dispositif d'accouplement (14).

7. Dispositif d'attelage électrique (10) selon l'une quelconque des revendications 4 à 6, **caractérisé en ce que** l'au moins un capteur d'assistance au stationnement (12) est disposé au milieu au-dessus ou en dessous du dispositif d'accouplement (14) du dispositif d'attelage (10).

8. Dispositif d'attelage électrique (10) selon l'une quelconque des revendications 4 à 7, **caractérisé en ce que** le dispositif de contrôle (16) présente un dispositif de commande (17).
